# EUROPEAN PATENT APPLICATION

(11) **EP 4 576 711 A1**
(43) Date of publication of application: **25.06.2025**
(21) Application number: 24208234.5
(22) Date of filing: 22.10.2024
(51) Int. Cl.: H04L 43/0829, H04L 47/11, H04L 47/27, H04L 47/33

(54) **METHOD AND SYSTEM FOR CONTROLLING NETWORK TRAFFIC BASED ON REASONS FOR PACKET LOSS**

(30) Priority: 21.12.2023 US 202318392898
(71) Applicant: Lemon Inc., Grand Cayman, KY1-1205 (KY)
(72) Inventor: SUN, Yan, Los Angeles, California 90066 (US)
(74) Representative: Dentons UK and Middle East LLP

(57) **Abstract**

Methods and systems using a communication protocol for controlling network traffic for a computer network. The method includes detecting (510) packet loss of packets of data in the network traffic received from one or more sender nodes; determining (530) a reason for the packet loss; and controlling a flow of network traffic in the computer network based on the determined reason for the packet loss. The reason for packet loss being due to link congestion or a different reason for packet loss.

## Description

### FIELD

The embodiments described herein pertain generally to controlling network traffic in computer networks. More specifically, the embodiments described herein pertain to methods, programs, devices, and systems for controlling network traffic based on packet loss, by which network traffic is controlled based on a reason for packet loss.

### BACKGROUND

In computer networking, data centers are provided for various services, such as, searching, cloud computing, social networking, shopping, big data analytics, gaming, communications, or the like. As the data transfer rate, utilizations, and scale in a computer network increases, it becomes more and more important to monitor underlying network fabrics and protocols in order to maximize the transport performance in the computer network to enhance the user experience, e.g., controlling the network traffic to minimize latency.

For example, the Transport Control Protocol (TCP) may be used to control the flow of the network traffic, since TCP may be designed, programmed, or otherwise configured to carry a much higher volume of network traffic on the Internet than any other transport-layer protocol. As is known, an additive-increase/multiplicative-decrease (AIMD) may be used as a control algorithm to adjust a TCP network traffic flow rate, e.g., by adjusting a maximum segment size or packet size (MSS), e.g., largest amount of data that the TCP may receive in a single segment, in a congestion window (CWND) at a sender node, an end node, and/or receiver node for congestion control. The basic idea of congestion control is that a sender transmits TCP packets on the network, then the system or network reacts to observable events to either increase or decrease the sending rate. For example, if the network is over-utilized, then the sending rate is decreased, e.g., decrease the size of the CWND; or, if the network is under-utilized, then the sending rate is increased, e.g., increase the size of the CWND.

There are various indicators of congestion, for example, packet loss, that may signal that the network is over-utilized. When a sender transmits TCP packets at a flow rate faster than the capacity of a bottleneck device, e.g., a link, end node, destination device, or the like with the smallest allocated bandwidth in the flow path, the bottleneck device puts the TCP packets in a buffer. As the sender continues to transmit packets faster than the packets can leave the buffer, the buffer will be filled with packets until eventually there is no longer any capacity for additional packets. When the buffer is full, the bottleneck device may drop new packets as they arrive, e.g., packet loss. The sender may be notified that packets are lost when no acknowledgment (ACK) is received, and the sender may then reduce its sending rate, e.g., reducing the size of the CWND.

### SUMMARY

Features in the embodiments disclosed herein may provide methods, programs, devices, and systems for improving computer network performance by responding differently to packet loss due to different network congestion events. In some embodiments, the methods, devices, and systems may be designed, programmed, or otherwise configured to distinguish between or determine various reasons for packet loss and to control the flow of network traffic differently based on one or more of the various reasons for packet loss. In some embodiments, the methods, programs, devices, and systems may use a network congestion signal, such as, Explicit Congestion Notification (ECN), a Round-Trip Time (RTT), or Inband Network Telemetry (INT), to distinguish or determine that the packet loss is either due to link congestion or due to a different reason for packet loss, such as, physical layer issues or hardware errors, cyclic redundancy check (CRC) failures, software errors, or the like. As such, by having methods, programs, devices, and systems that respond to packet loss based on the reason for the packet loss, computer network performance (and quality of service) may be improved. For example, when packet loss is due to reasons other than link congestion, reducing the congestion window (CWND) may actually adversely affect computer network performance. Thus, the methods, programs, devices, and systems, as discussed herein, may be provided such that when it is determined that the reason for packet loss is not due to link congestion, a flow of the network traffic may be maintained, but only when it is primarily determined that the reason for packet loss is due to the link congestion is the flow of network traffic reduced, e.g., only when the reason for packet loss is due to link congestion. The methods, programs, devices, and systems may also be used to track the physical layer issues along the path or link, which may be used to alert the network operator to replace devices, links, or the like having any issues.

In one example embodiment, a method using a communication protocol for controlling network traffic for a computer network is provided. The method includes detecting packet loss of packets of data in the network traffic received from one or more sender nodes; determining a reason for the packet loss; and controlling a flow of network traffic in the computer network based on the determined reason for the packet loss. The reason for packet loss being due to link congestion or a different reason for packet loss.

In another embodiment, a congestion controller in a computer network using a communication protocol is provided. The congestion controller includes a processor configured to execute instructions, wherein the instructions, when executed, cause the processor to: detect packet loss of packets of data in network traffic received from one or more sender nodes; determine a reason for the packet loss; and control a flow of network traffic in the computer network based on the determined reason for the packet loss. The reason for packet loss being due to link congestion or a different reason for packet loss.

In yet another embodiment, a non-transitory computer-readable medium having computer-executable instructions stored thereon is provided. The computer-executable instructions, upon execution, cause one or more processors of an end node of a computer network using a communication protocol to perform operations including detecting packet loss of packets of data in the network traffic received from one or more sender nodes; determining a reason for the packet loss; and controlling a flow of network traffic in the computer network based on the determined reason for the packet loss. The reason for packet loss being due to link congestion or a different reason for packet loss.

### BRIEF DESCRIPTION OF THE DRAWINGS

The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another, and vice versa. Non-limiting and non-exhaustive descriptions are described with reference to the following drawings. The components in the figures are not necessarily to scale, emphasis instead being placed upon illustrating principles. In the detailed description that follows, embodiments are described as illustrations only since various changes and modifications may become apparent to those skilled in the art from the following detailed description.
FIG. 1 is a schematic view of an example computer networking system for controlling network traffic, arranged in accordance with at least some embodiments described herein.
FIG. 2 is a schematic view of an example network for managing network traffic, arranged in accordance with at least some embodiments described herein.
FIG. 3 is a schematic view of an AIMD control algorithm, arranged in accordance with at least some embodiments described herein.
FIG. 4 is a schematic view of an example comparison of existing congestion control algorithms and a congestion control algorithm arranged in accordance with at least some embodiments described herein.
FIG. 5 is a flow chart illustrating an example processing flow of controlling network traffic, in accordance with at least some embodiments described herein.
FIG. 6 is a schematic structural diagram of an example computer system applicable to implementing a device, arranged in accordance with at least some embodiments described herein.

### DETAILED DESCRIPTION

In the following detailed description, particular embodiments of the present disclosure are described herein with reference to the accompanying drawings, which form a part of the description. In this description, as well as in the drawings, like-referenced numbers represent elements that may perform the same, similar, or equivalent functions, unless context dictates otherwise. Furthermore, unless otherwise noted, the description of each successive drawing may reference features from one or more of the previous drawings to provide clearer context and a more substantive explanation of the current example embodiment. Still, the example embodiments described in the detailed description, drawings, and claims are not intended to be limiting. Other embodiments may be utilized, and other changes may be made, without departing from the scope of the subject matter presented herein. It will be readily understood that the aspects of the present disclosure, as generally described herein and illustrated in the drawings, may be arranged, substituted, combined, separated, and designed in a wide variety of different configurations, all of which are explicitly contemplated herein.

It is to be understood that the disclosed embodiments are merely examples of the disclosure, which may be embodied in various forms. Well-known functions or constructions are not described in detail to avoid obscuring the present disclosure in unnecessary detail. Therefore, specific structural and functional details disclosed herein are not to be interpreted as limiting, but merely as a basis for the claims and as a representative basis for teaching one skilled in the art to variously employ the present disclosure in virtually any appropriately detailed structure.

Additionally, the present disclosure may be described herein in terms of functional block components and various processing steps. It should be appreciated that such functional blocks may be realized by any number of hardware and/or software components configured to perform the specified functions.

The scope of the disclosure should be determined by the appended claims and their legal equivalents, rather than by the examples given herein. For example, the steps recited in any method claims may be executed in any order and are not limited to the order presented in the claims. Moreover, no element is essential to the practice of the disclosure unless specifically described herein as "critical" or "essential".

As referenced herein, "computer networking" or "computer network" is a term of art that may refer to interconnected computing devices that may exchange data and share resources with each other. It is to be understood that the networked devices may use communications protocols (e.g., a system of rules, etc.), to transmit or receive information over wired or wireless technologies.

As referenced herein, a "packet", "packet of data", "network packet", or "network data packet" in computer networking is a term of art that may refer to a formatted unit of data carried by a computer networking system. It is to be understood that a packet may include control information and user data. User data may refer to the "payload". Control information may provide information for delivering the payload (e.g., source and destination network addresses, error detection codes, sequencing information, etc.). It is also to be understood that control information typically may be stored in packet headers and/or trailers. It is further to be understood that control information may include metadata. Metadata in computer networking may refer to descriptive information about the user data, or "data about the data." Metadata may carry individual traits pertaining to the structure of communications protocols and the packets.

As referenced herein, a "traffic flow", "packet flow", a "flow of network traffic," "network traffic," or "network flow" in computer networking may refer to a volume of or a sequence of packets from a source computer or device to a destination computer or device, which may be another host, a multicast group, or a broadcast domain including routers and/or switches for transmitting (and/or receiving) the packets. It is to be understood that a traffic flow may include all packets in a specific transport connection and/or a media stream, and may include a set of packets passing an observation point in the network during a certain time interval.

As referenced herein, a "congestion window" or "CWND" in computer networking may refer to a variable that may be controlled to limit the amount of data that a control protocol, e.g., TCP, may send into a network before receiving an ACK. That is, the CWND is one of the factors that determines a number of bytes that may be sent out by a sender, e.g., sender node, which the CWND may use to stop a link between the sender and the receiver, e.g., end node, from becoming overloaded with too much traffic. When setting up a connection, the CWND may be set based on the amount of network traffic allowed by the receiver or host, e.g., end node, or intermediary device(s), e.g., link, router, switch, etc. CWND may be adjusted for any variance in flow of network traffic, by an additive increase/multiplicative decrease (AIMD) approach, e.g., if all segments are received and acknowledge, some constant is added to the size of the CWND, and multiplicatively decreased otherwise. As used herein, the sender node may also include a switch or router or other device that may be used to transmit data. The CWND may be maintained by a sender node, a receiver node, and/or an end node.

As referenced herein, "network congestion" in computer networking may refer to the computer network being unable to handle or carry data by a device, such as, a network node (end node), destination device, router, switch, or link, in a computer network, e.g., a sender node transmitting packets of data at a flow rate faster than the capacity of the receiving device. In some embodiments, during network congestion, the device may queue packets of data in a buffer, in which after the buffer becomes full, new packets may be dropped, e.g., packet loss. Network congestion may reduce the quality of service, e.g., due to packet loss.

As referenced herein, "link congestion" in computer networking may refer to a network node or link carrying more data than it can handle, e.g., more than available bandwidth, in which an incremental increase in the load may result in only a small increase or even a decrease in network throughput.

As referenced herein, a "communication protocol" in computer networking may refer to a set of rules for two or more devices in a computer network to transmit information or data. Protocols may define the rules, syntax, semantics, and synchronization of communication and possible error recovery methods. In some embodiments, the communication protocol may be the Transport Control Protocol (TCP) or User Datagram Protocol (UDP) and/or may be the Internet Protocol (IP), Post Office Protocol (POP), Simple mail transport Protocol (SMTP), File Transfer Protocol (FTP), Hyper Text Transport Protocol (HTTP), Hyper Text Transfer Protocol Secure (HTTPS), Telnet, Gopher, or the like. The protocols may be implemented by hardware, software, or a combination thereof.

Many network congestion controllers may use packet loss as an indicator of network congestion and treat the packet loss as a severe congestion event. The network congestion controllers may then be programmed, designed, or otherwise configured to reduce a size of a congestion window (CWND), e.g., of one or more sender nodes or end nodes, based on receiving an indication of the packet loss, regardless of the source of the congestion. For example, in TCP, the prior congestion control algorithms or controllers may use a CWND to limit the total number of unacknowledged packets that may be in transit end-to-end, e.g., bytes in flight, in which if the number of unacknowledged segments is equal to the maximum available size of the CWND, e.g., available bandwidth, the sender stops sending data until more ACKs are received. Additive increase/multiplicative decrease (AIMD) may be used as the primary feedback control algorithm for the prior congestion control algorithms or controllers to adjust the TCP flow of the packets of data, e.g., by adjusting the size of the CWND. The basic AIMD algorithm may go as follows, assuming that packet loss is used as an indicator of congestion:

Additive increase: Increase the CWND by a fixed amount (e.g., one MSS) every round-trip time (RTT) that no packet is lost.

Multiplicative decrease: Decrease the congestion window by a multiplicative factor (e.g., 1/2) every RTT that a packet loss occurs.

That is, the prior congestion controllers are designed, programmed, or otherwise configured to apply a multiplicative decrease to the size of the CWND arbitrarily, e.g., just based on any indication of packet loss, such that a classic "saw tooth" pattern in the TCP flow based on the congestion control results. Such multiplicative decrease in the size of the CWND, however, may result in harm to the user's quality of service, e.g., causes applications, such as, searching, cloud computing, social networking, shopping, big data analytics, gaming, communications, or the like, to have poor performance due to high packet loss from the multiplicative decrease in the size of the CWND.

That is, the arbitrary decrease in the transmission of packets of data, e.g., a reduction in the size of the CWND, based on any indication of packet loss may unnecessarily affect the computer network performance. For example, when packet loss is due to reasons other than link congestion, reducing the congestion window (CWND) may unnecessarily hurt the computer network performance, while not solving the underlying root condition causing the packet loss, e.g., the packet loss may be a random event and not a repeated event due to the packet loss being caused by a physical error, such that the arbitrary reduction of the size of the CWND does not alleviate the packet loss.

Features in the embodiments disclosed herein may provide methods, programs, devices, and systems for improving the computer network performance by responding differently to packet loss due to different network congestion events. In some embodiments, the methods, programs, devices, and systems may be designed, programmed, or otherwise configured to distinguish between or determine various reasons for packet loss and to control the flow of network traffic differently based on the various reasons for packet loss. In some embodiments, the methods, devices, and systems may use a network congestion signal, such as, Explicit Congestion Notification (ECN), a Round-Trip Time (RTT), or Inband Network Telemetry (INT), to distinguish or determine that the packet loss is either due to link congestion or a different reason for packet loss, such as, physical layer issues or hardware errors, cyclic redundancy check (CRC) failures, software errors, or the like. As such, by having methods, programs, devices, and systems that respond to packet loss based on a determined reason for the packet loss, the computer network performance (and quality of service) may be improved. For example, when packet loss is due to reasons other than link congestion, reducing the congestion window (CWND) may hurt the computer network performance. Thus, the methods, devices, programs and systems, as discussed herein, may be provided such that when it is determined that the reason for packet loss is not due to link congestion, the flow of the network traffic may be maintained, and only when it is determined that the reason for packet loss is due to the link congestion, the flow of network traffic is reduced. The methods, devices, and systems may also be used to track the physical layer issues along the path or link, which may be used to alert the network operator to replace devices, links, or the like having any issues.

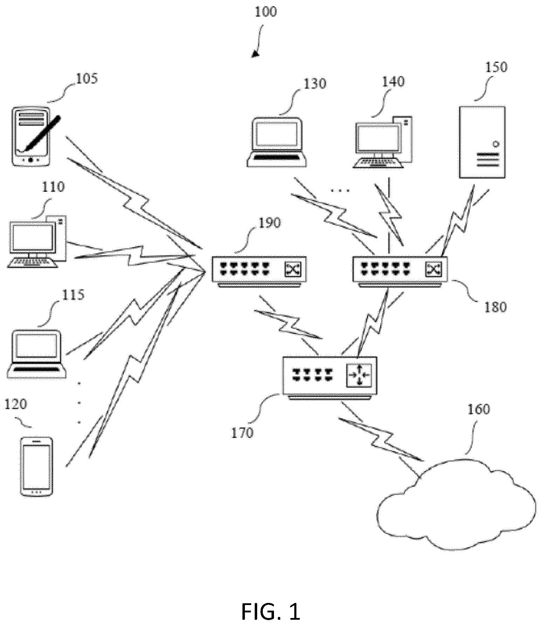

FIG. 1 is a schematic view of an example computer networking system 100 for controlling network traffic, arranged in accordance with at least some embodiments described herein.

The system 100 may include devices 105, 110, 115, 120, 130, 140, 150, a network 160, a router 170, and/or network switches 180 and 190. It is to be understood that FIG. 1 only shows illustrative numbers of the devices (105, 110, 115, 120, 130, 140, 150, 170, 180, and/or 190) and/or the network. The embodiments described herein are not limited to the number of the devices and/or the network described. That is, the number of devices and/or networks described herein are provided for descriptive purposes only and are not intended to be limiting.

In accordance with at least some example embodiments, the devices 105, 110, 115, 120, 130, 140, and/or 150 may be various electronic devices that may be sender nodes, end nodes, and/or receiver nodes. The various electronic devices may include but not be limited to a mobile device such as a smartphone, a tablet computer, an e-book reader, a laptop computer, a desktop computer, a server, a data center, and/or any other suitable electronic devices.

In accordance with at least some example embodiments, one or more of the devices 105, 110, 115, 120, 130, 140, and/or 150 may be a server or data center for providing various services to users using one or more of other devices. The server may be implemented by a distributed server cluster including multiple servers or may be implemented by a single server.

In accordance with at least some example embodiments, the network 160 may be a medium used to communicatively connect one or more of the devices 105, 110, 115, 120, 130, 140, 150, 170, 180, and/or 190. The network 160 may be the Internet, a local area network (LAN), a wide area network (WAN), a local interconnect network (LIN), a cloud, etc. The network 160 may be implemented by various types of connections, such as a wired communications link, a wireless communications link, an optical fiber cable, etc.

In accordance with at least some example embodiments, router 170 may be provided in the network 160 for selecting paths for the packets of data, e.g., between computer networks. In some embodiments, the router 170 may direct network traffic between computer networks and the Internet and the destination device, such as, one or more of devices 105, 110, 115, 120, 130, 140, 150.

In accordance with at least some example embodiments, switches 180 and 190 may be provided in the network 160 for connecting, e.g., providing the communications link, among the devices 105, 110, 115, 120, 130, 140, 150 and the router 170. In some embodiments, the switches 180 and 190 may be provided for managing the flow of network traffic across the network, e.g., from the routers and/or sender nodes and/or end nodes, by forwarding packets of data to/from the device(s), e.g., only to the one or more device(s) of which the packets of data are intended.

A user may use one or more of the devices 105, 110, 115, 120, 130, 140, 150 to interact with each other via the network 160, e.g., as a sender node and/or receiver node. Various applications or localized interfaces thereof, such as searching, cloud computing, social networking, shopping, big data analytics, gaming, communications, or the like, may be installed on the devices 105, 110, 115, 120, 130, 140, and/or 150.

It is to be understood that software applications or services according to the embodiments described herein and/or according to the services provided by the service providers may be performed by any one or more of the devices 105, 110, 115, 120, 130, 140, 150, 170, 180, and/or 190. Accordingly, the apparatus for the software applications and/or services may be arranged in the devices 105, 110, 115, 120, 130, 140, 150, 170, 180, and/or 190.

It is also to be understood that when a service is not performed remotely, the system 100 may not include the network 160, but include only the device 105, 110, 115, 120, 130, 140, 150, 170, 180, and/or 190.

It is further to be understood that the devices 105, 110, 115, 120, 130, 140, 150, 170, 180, and/or 190 may each include one or more processors, a memory, and a storage device storing one or more programs on non-volatile memory. The devices 105, 110, 115, 120, 130, 140, 150, 170, 180, and/or 190 may also each include an Ethernet connector, a wireless fidelity receptor, etc. The one or more programs, when being executed by the one or more processors, may cause the one or more processors to perform the method(s) described in any embodiments described herein. Also, it is to be understood that a computer readable non-volatile medium may be provided according to the embodiments described herein. The computer readable medium stores computer programs. The computer programs are used to, when being executed by a processor, perform the method(s) described in any embodiments described herein.

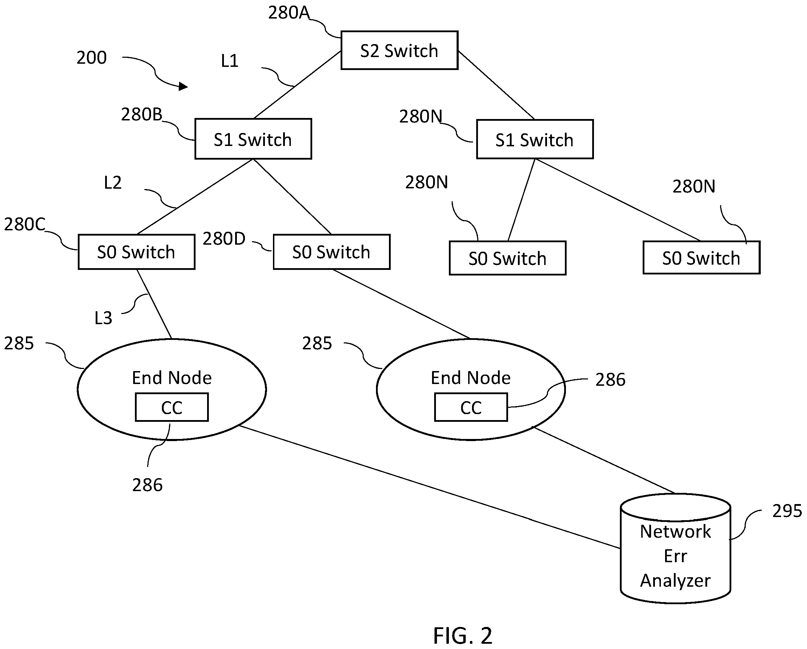

FIG. 2 is a schematic view of an example network 200 for managing network traffic, arranged in accordance with at least some embodiments described herein. The network 200 may be designed, programmed, or otherwise configured to provide a medium used to provide a communications link among one or more devices (e.g., 105, 110, 115, 120, 130, 140, 150, 180, 190 of FIG. 1). The network 200 may include one or more routers for selecting paths for packets of data and transferring of the same to the destination device(s), via the switches 280 and links, which are designed, programmed, and/or otherwise configured to manage the flow of the network traffic across the network by transmitting a received packet of data to only the one or more devices for which the packets of data is intended, e.g., via network address or the like. In an example embodiment, the network 200 may be the network 160 of FIG. 1 and may include sender nodes and/or end nodes, switches (e.g., 180 and/or 190 of FIG. 1), routers (e.g., 170 of FIG. 1), etc.

In an example embodiment, the network 200 may include one or more sender nodes (e.g., 105, 110, 115, 120, 130, 140, 150, 180, 190 of FIG. 1) that may transmit packets of data over the network 200. The sender nodes may transmit the packets of data over the network 200 via links (e.g., L1, L2, L3), e.g., communication channels, to one or more switches 280, one or more end nodes 285, and/or one or more routers (e.g., 170 of FIG. 1).

In some embodiments, the one or more switches 280A...280N may be connected having a daisy chain topology, e.g., communications link from S2 switch 280A to S1 switch(es) 280B to S0 switch(es) to end node 285 for transmitting/receiving packets of data. Unless context otherwise requires, reference will be made to switch or switches 280 (in general). The switches 280 may be provided for managing the flow of network traffic across the network, e.g., from the routers (e.g., 170 of FIG. 1) and/or other switches 280, by forwarding packets of data to/from the destination device(s) or end node(s), e.g., only to/from the one or more device(s) of which the packets of data are intended. In some embodiments, the switches 280 may be layer 2 and/or layer 3 layers, e.g., data link layer and/or network layer. In some of the embodiments, one or more of the switches 280 may be connected to an end node 285 having a congestion control algorithm or controller (CC) 286 that is designed, programmed, or otherwise configured for packet loss analysis.

In some embodiments, the end node 285 may be a data center or destination device that includes the congestion control algorithm or controller 286 to control sending rate, e.g., by sending a signal to the sender node or controlling the flow of network traffic at the end node 285. In some embodiments, the congestion control algorithm or controller 286 may be designed, programmed, or otherwise configured to detect packet loss of packets of data in the network traffic, e.g., from one or more of the sender node, link, router, or the like. The packet loss may be detected by any of the methods for detecting packet loss, including, but not limited to by the underlying communication protocol, e.g., TCP, pinging the network devices, using packet loss test tools, e.g., using WebRTC, using marked packets, or the like.

In some embodiments, the congestion control algorithm or controller 286 corresponding to end node 285 may be designed, programmed, or otherwise configured to control the sending rate by adjusting a size of a CWND. The CWND may have a bandwidth or maximum size, e.g., MSS value, corresponding to the capacity of packets of data that may be received by the end node, which may be a private value maintained by the end node, e.g., not advertised or exchanged between the sender and the receiver. While the congestion control algorithm or controller 286 may use the CWND for additive increase, e.g., increase the size of the CWND by a fixed amount (e.g., one maximum segment size or maximum packet size (MSS), e.g., the largest amount of data that the TCP may receive in a single segment) every RTT that no packet is lost, the congestion control algorithm or controller 286 may be designed, programmed, or otherwise configured to decrease the size of the CWND only when packet loss is detected due to link congestion. That is, rather than treating packet loss as a severe congestion even and decreasing the size of the CWND regardless of the source of congestion, the congestion control algorithm or controller 286, as described herein, is designed, programmed, or otherwise configured to distinguish between various reasons for packet loss and to have a different response, e.g., control of the flow of network traffic, based on the reason for packet loss, e.g., due to link congestion (or link failure) or a different reason for packet loss, such as, hardware errors, such as, physical layer issues, software errors, cyclic redundancy check (CRC) failure, e.g., issues which may happen randomly and may not repeat in the same place.

For example, in some embodiments, the congestion control algorithm or controller 286 may be designed, programmed, or otherwise configured to detect for a network congestion signal. The network congestion signal may be one or more of an Explicit Congestion Notification (ECN), a Round-Trip Time (RTT), or Inband Network Telemetry (INT), but not limited thereto. In some embodiments, the network congestion signal may be detection of a timeout, e.g., due to a link being down or a high congestion in both directions. As such, the congestion control algorithm or controller 286 may be designed, programmed, or otherwise configured to detect one or more of the network congestion signals, such as, RTT, ECN, INT, or timeout, and determine from the network congestion signal whether packet loss is due to link congestion or a different reason for packet loss, such as physical layer issues or hardware errors, CRC failure, hardware issues, which happen randomly and do not repeat in the same place.

In an example embodiment, if there is congestion, the sender may receive ECN/INT information about the congestion before the packet is lost. If packet loss is detected, e.g., by double acknowledgement (ACK), but there is no ECN/INT information received, the congestion control algorithm or controller 286 may be configured to treat or determine that the packet loss as being a different reason for packet loss (other than due to link congestion), and the congestion control algorithm or controller 286 may not decrease or reduce the size of the CWND, e.g., maintain the flow of the network traffic. However, if the congestion control algorithm or controller 286 detects that there is congestion in the network traffic and a network congestion signal is detected, the congestion control algorithm or controller 286 may be configured to treat or determine that the packet loss as being due to link congestion, and the congestion control algorithm or controller 286 may decrease the size of the CWND in accordance with solutions described and recited herein.

In some embodiments, the detection of the network congestion signal may include detecting or determining the ECN/INT information in two time-windows, e.g., to detect congestion-based packet loss. The two time windows may be referred to as a before-loss-window and an after-loss-window and the two window sizes may be initialized and updated based on packet loss rate environments and real time network conditions, e.g., flow of network traffic and underlying network. For example, in some embodiments, a connection that includes wireless connection may have the highest packet loss rate, the long internet connection has moderate packet loss rate and data center network has the lowest packet loss rate and shortest RTT. So the data center environment may have a shorter before-loss-window and after-loss-window. That is, in some embodiments, the size of the CWND may be the same level as the RTT. In some embodiments, the data centers may use relatively larger window sizes because of the least packet loss probability.

For example, when a packet N is lost, there may be 4 packets before packet N in the before-loss-window and 2 packets after packet N in the after-loss-window. As such, a receiver (or end node) may send the packet N lost information, e.g., negative acknowledgment (NACK), back to the sender and also information of whether packet N+1 and packet N+2 experience any congestion. If any of the packets within these two windows is detected as experiencing congestion, then the reason for packet loss is determined as being due to link congestion. That is, if ECN/INT information was received within one of the two time windows, then the congestion control algorithm or controller 286 may treat the packet loss as being due to link congestion and may decrease the size of the CWND, for example, by reducing the size of the CWND by at least a multiplicative factor, such as, a tenth, quarter, half or the like.

On the other hand, in another example embodiment, when short bursts from other flows are detected, and the sender does not receive any ECN/INT information in either the before-loss-window or the after-loss-window, the congestion control algorithm or controller 286 may treat the packet loss as the other reason for the packet loss, and may not reduce the size of the CWND because the congestion may have already ended.

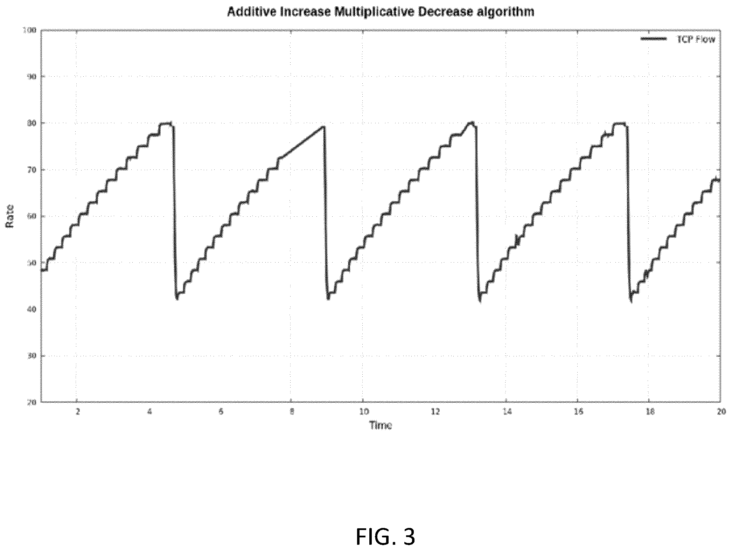

In some embodiments, the congestion control algorithm or controller 286 may include a modified additive-increase/multiplicative-decrease (AIMD) algorithm. For example, as illustrated in FIG. 3, the congestion control algorithm or controller 286 may be designed, programmed, or otherwise configured to initially start the CWND at a predetermined window size, e.g., 5, 10, 20, 30, or 40 MSS. The value of the congestion window size may then be increased or incremented by a fixed amount, such as, 1 MSS, with each ACK received (for each RTT), e.g., packet loss is not detected. When the congestion control algorithm or controller 286 detects that packet loss has occurred, e.g., when the network traffic reaches the maximum CWND size corresponding to the maximum capacity of the end node, e.g., 80 MSS, or due to physical layer or hardware issues, the congestion control algorithm or controller 286 controls the flow of network traffic in the computer network.

That is, as seen in FIG. 3, the congestion control algorithm or controller 286 may have the CWND initiated or started at a predetermined window size, e.g., 48 MSS, that is increased or incremented by a fixed amount, such as, 1 MSS, with each ACK received (for each RTT), e.g., when packet loss is not detected. When the congestion control algorithm or controller 286 detects packet loss of packets of data in the network traffic, the congestion control algorithm or controller 286 may be configured to determine a reason for the packet loss and control the flow of the network traffic in the computer network based on the reason for the packet loss. When the reason for packet loss is determined to be due to link congestion, e.g., more data than the end node may handle, the congestion control algorithm or controller 286 may reduce the size of the CWND for the network traffic, e.g., by a multiplicative factor, for example, half, e.g., from 80 MSS to 40 MSS.

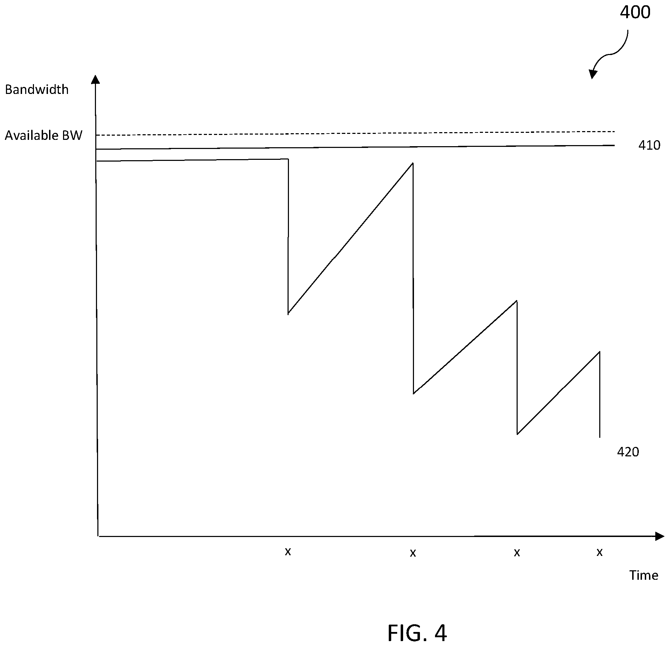

However, as seen in FIG. 4, when the congestion control algorithm or controller 286 determines that the reason for packet loss is not due to link congestion, e.g., a different reason for packet loss such as physical layer or hardware or software issues, the flow of the network traffic is maintained, e.g., the size of the CWND is not decreased to limit the flow of network traffic through the end node, as seen by line 410. As such, by having methods, devices, and systems that respond to packet loss based on the reason for the packet loss, the computer network performance may be improved. For example, when packet loss is due to reasons other than link congestion, reducing the congestion window (CWND) may hurt the computer network performance.

That is, as seen in line 420, the existing congestion control algorithms or controllers are designed, programmed, or otherwise configured to decrease or reduce the size of the CWND anytime packet loss is detected including physical layer or hardware or software issues in which the flow of the network traffic is negatively affected e.g., the computer network performance by reducing the amount of network traffic sharply, which may adversely affect the quality of service.

Referring back to FIG. 2, in some embodiments, the end node(s) 285 may be in communication with the network error analyzer 295 that is designed, programmed, or otherwise configured to measure network parameters of the network 200, e.g., in the packet loss context including, but not limited to route, locations, timestamp, etc., which may be information from the controller 286. In some embodiments, the network error analyzer 295 may be designed, programmed, or otherwise configured to further analyze the time and locations of packet loss that occurs not because of network congestion and may determine where in the computer network, the packet loss occurs, e.g., at certain network devices, such as, switches, end nodes, routers, links, or the like. As such, the network error analyzer 295 may be designed, programmed, or otherwise configured to use this information to alert network operators, e.g., operators of the data centers, Internet network, or the like, to fix any hardware, software, or other issues for the network devices or links, e.g., networks having old network fabric, such as a link flap. That is, while in prior data centers or networks, network devices and/or links may be replaced periodically, e.g., every 5 years, to proactively address physical layer or hardware or software issues, by having the network error analyzer 295, as discussed herein, configured to determine where in the computer network the packet loss may occur, only the network devices and/or links causing the packet loss may be identified and repaired/replaced, which reduces the costs for maintaining the network and/or data center. Additionally, by being able to detect for the network congestion signal and using the network congestion signal, additional capital expenditure on monitors for monitoring for errors on each device may be avoided, e.g., avoids additional overhead, and may avoid the need to sample the network, which may reduce the available bandwidth, since the congestion controller or algorithm, as discussed herein, uses the signals already provided therein.

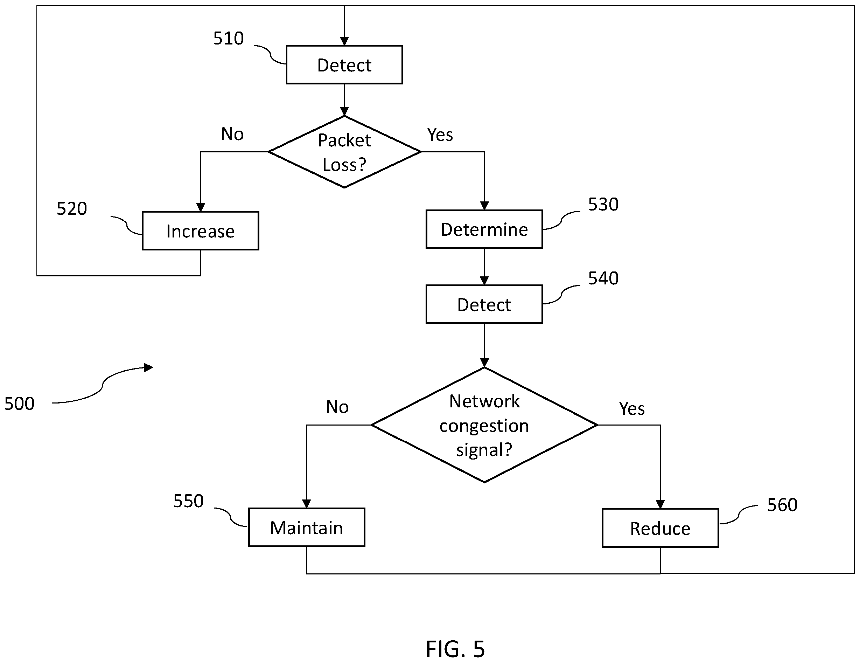

FIG. 5 is a flow chart illustrating an example processing flow 500 using a communication protocol for controlling network traffic for a computer network, in accordance with at least some embodiments described herein.

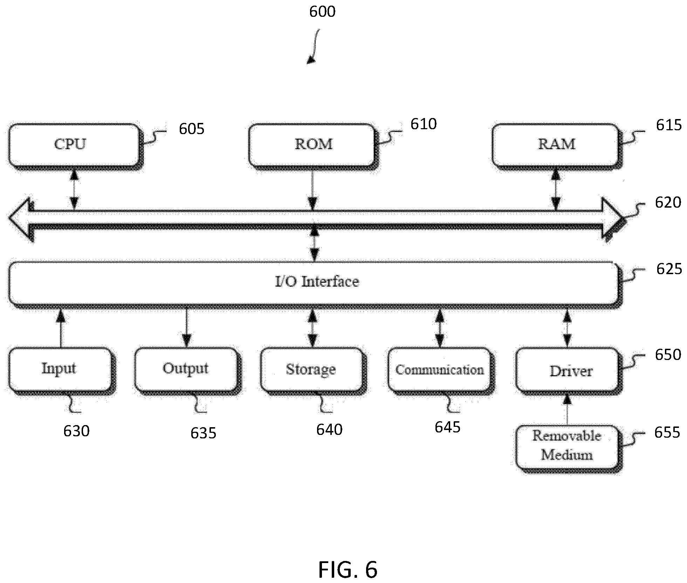

It is to be understood that the processing flow 500 disclosed herein can be conducted by one or more processors such as a local device management CPU of the device (e.g., the router, the switch, etc.), including e.g., the processor of one or more of the device 105, 110, 115, 120, 130, 140, 150, 170, 180, and/or 190 of FIG. 1, the CPU 605 of FIG. 6, and/or any other suitable processor, unless otherwise specified.

It is also to be understood that the processing flow 500 can include one or more operations, actions, or functions as illustrated by one or more of blocks 510, 520, 530, 540, 550, 560. These various operations, functions, or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. It is to be understood that before the processing flow 500, operations including initializations or the like may be performed. For example, system parameters and/or application parameters may be initialized. It is to be understood that the processes, operations, or actions described in FIGS. 2-4 may be implemented or performed by the processor. Processing flow 500 may begin at block 510.

At block 510 (Detect), the processor for a respective device may detect packet loss of packets of data in the network traffic received from one or more sender nodes. The packet loss may be detected by any of the existing methods for detecting packet loss, including, but not limited to by the underlying communication protocol, e.g., TCP, pinging the network devices, using packet loss test tools, e.g., using WebRTC, using marked packets, or the like. Processing may proceed from block 510 to block 520 or 530.

At block 520 (Increase), when no packet loss is detected, e.g., until packet loss is detected, the processor may increase an amount of the network traffic for the end node by a fixed amount, e.g., increment the MSS by one maximum segment size or maximum packet size. For example, the value of the congestion window size may be increased or incremented by a fixed amount, such as, 1 MSS, with each ACK received (for each RTT), e.g., until packet loss is detected. Processing may proceed back to block 510.

At block 530 (Determine), when packet loss is detected, the processor may determine a reason for the packet loss. For example, in some embodiments, the determine step 520 may include block 540 (Detect), in which the processor may be designed, programmed, or otherwise configured to detect for a network congestion signal. The network congestion signal may be one or more of an Explicit Congestion Notification (ECN), a Round-Trip Time (RTT), or Inband Network Telemetry (INT), but not limited thereto. In some embodiments, the network congestion signal may be detection of a timeout, e.g., due to a link being down or a high congestion in both directions. As such, the processor may be designed, programmed, or otherwise configured to detect one or more of the network congestion signals, such as, RTT, ECN, INT, or timeout, and determine from the network congestion signal whether packet loss is due to link congestion or a different reason for packet loss, such as physical layer issues or hardware errors, CRC failure, hardware issues, which happen randomly and do not repeat in the same place.

In some embodiments, the detection of the network congestion signal may include detecting or determining the ECN/INT information in at least two time-windows, e.g., to detect congestion-based packet loss. The two time windows may be referred to as a before-loss-window and an after-loss-window and the two window sizes may be initialized and updated based on packet loss rate environments and real time network conditions, e.g., flow of network traffic and underlying network. For example, when a packet N is lost, there may be 4 packets before packet N in the before-loss-window and 2 packets after packet N in the after-loss-window. As such, a receiver (or end node) may send the packet N lost information, e.g., negative acknowledgment (NACK), back to the sender and also information of whether packet N+1 and packet N+2 experience any congestion. If any of the packets within these two windows is detected as experiencing congestion, then the reason for packet loss is determined as being due to link congestion. Otherwise, the processor may be designed, programmed, or otherwise configured to determine that the reason for packet loss as being the different reason for packet loss, such as physical layer issues or hardware errors, CRC failure, hardware issues, which happen randomly and do not repeat in the same place.

In an example embodiment, if there is congestion, the sender may receive ECN/INT information about the congestion before the packet is lost. If packet loss is detected, e.g., by double acknowledgement (ACK), but there is no ECN/INT information received, the processor may be configured to treat or determine that the packet loss as being a different reason for packet loss (other than due to link congestion). In another example embodiment, when short bursts from other flows are detected, and the sender does not receive any ECN/INT information in either the before-loss-window or the after-loss-window, the processor may treat the packet loss as the other reason for the packet loss, e.g., not link congestion, because the congestion may have already ended. Processing may proceed from block 540 to block 550.

At block 550 (Maintain), the processor may be designed, programmed, or otherwise configured to control the flow of network traffic in the computer network by maintaining the flow of network traffic, since the reason for packet loss was not due to link congestion. That is, the processor (at the end node) does not decrease the size of the CWND, but rather maintains the same or similar flow rate of the network traffic. Processing may proceed from block 550 to block 510.

However, if the processor detects that there is congestion in the network traffic and a network congestion signal is detected, the processor may be configured to treat or determine that the packet loss is due to link congestion. Processing may proceed from block 540 to block 560.

At block 560 (Reduce), the processor may be designed, programmed, or otherwise configured to control the flow of network traffic in the computer network by reducing a size of a CWND for the network traffic, since the reason for packet loss was due to link congestion. In some embodiments, the reducing the size of the CWND may include decreasing or reducing the size of the CWND, for example, by at least a multiplicative factor, such as, a tenth, quarter, half or the like. Processing may proceed from block 560 to block 510.

That is, while many network congestion controllers or algorithms that are based on packet loss may treat packet loss as a severe congestion event and decrease the size of the CWND regardless of the source of the congestion, the congestion control algorithm or controller, as described herein, is designed, programmed, or otherwise configured to distinguish between various reasons for packet loss and to have a different response, e.g., control of the flow of network traffic, based on the reason for packet loss, e.g., due to link congestion (or link failure) or a different reason for packet loss, such as, hardware errors, such as, physical layer issues, software errors, cyclic redundancy check (CRC) failure, e.g., issues which may happen randomly and may not repeat in the same place.

FIG. 6 is a schematic structural diagram of an example computer system 600 applicable to implementing a device (for example, 105, 110, 115, 120, 130, 140, 150, 170, 180, and/or 190 of FIG. 1), arranged in accordance with at least some embodiments described herein. It is to be understood that the computer system shown in FIG. 6 is provided for illustration only instead of limiting the functions and applications of the embodiments described herein.

As depicted, the computer system 600 may include a central processing unit (CPU) 605. The CPU 605 may perform various operations and processing based on programs stored in a read-only memory (ROM) 610 or programs loaded from a storage device 640 to a random-access memory (RAM) 615. The RAM 615 may also store various data and programs required for operations of the system 600. The CPU 605, the ROM 610, and the RAM 615 may be connected to each other via a bus 620. An input/output (I/O) interface 625 may also be connected to the bus 620.

The components connected to the I/O interface 625 may further include an input device 630 including a keyboard, a mouse, a digital pen, a drawing pad, or the like; an output device 635 including a display such as a liquid crystal display (LCD), a speaker, or the like; a storage device 640 including a hard disk or the like; and a communication device 645 including a network interface card such as a LAN card, a modem, or the like. The communication device 645 may perform communication processing via a network such as the Internet, a WAN, a LAN, a LIN, a cloud, etc. In an embodiment, a driver 650 may also be connected to the I/O interface 625. A removable medium 655 such as a magnetic disk, an optical disk, a magneto-optical disk, a semiconductor memory, or the like may be mounted on the driver 650 as desired, such that a computer program read from the removable medium 655 may be installed in the storage device 640.

It is to be understood that the processes described with reference to the flowchart of FIG. 5 and/or the processes described in other figures may be implemented as computer software programs or in hardware. The computer program product may include a computer program stored in a computer readable non-volatile medium. The computer program includes program codes for performing the method shown in the flowcharts and/or GUIs. In this embodiment, the computer program may be downloaded and installed from the network via the communication device 645, and/or may be installed from the removable medium 655. The computer program, when being executed by the central processing unit (CPU) 605, can implement the above functions specified in the method in the embodiments disclosed herein.

It is to be understood that the disclosed and other solutions, examples, embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., a field programmable gate array, an application specific integrated circuit, or the like.

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., erasable programmable read-only memory, electrically erasable programmable read-only memory, and flash memory devices; magnetic disks, e.g., internal hard disks or removable disks; magneto optical disks; and compact disc read-only memory and digital video disc read-only memory disks. The processor and the memory can be supplemented by, or incorporated in, special purpose logic circuitry.

It is to be understood that different features, variations and multiple different embodiments have been shown and described with various details. What has been described in this application at times in terms of specific embodiments is done for illustrative purposes only and without the intent to limit or suggest that what has been conceived is only one particular embodiment or specific embodiments. It is to be understood that this disclosure is not limited to any single specific embodiments or enumerated variations. Many modifications, variations and other embodiments will come to mind of those skilled in the art, and which are intended to be and are in fact covered by both this disclosure. It is indeed intended that the scope of this disclosure should be determined by a proper legal interpretation and construction of the disclosure, including equivalents, as understood by those of skill in the art relying upon the complete disclosure present at the time of filing.

### Aspects:

It is appreciated that any one of aspects can be combined with each other.

Aspect 1. A method using a communication protocol for controlling network traffic for a computer network, the method comprising: detecting packet loss of packets of data in the network traffic received from one or more sender nodes; determining a reason for the packet loss; and controlling a flow of network traffic in the computer network based on the determined reason for the packet loss, wherein the reason for packet loss is due to link congestion or a different reason for packet loss.

Aspect 2. The method of Aspect 1, wherein the determining the reason for the packet loss includes: detecting for a network congestion signal, wherein when the network congestion signal is detected, determining that the reason for the packet loss is due to link congestion.

Aspect 3. The method of Aspect 2, wherein the network congestion signal includes one or more of an Explicit Congestion Notification (ECN), a Round-Trip Time (RTT), or Inband Network Telemetry (INT).

Aspect 4. The method of any of Aspects 1-3, wherein the controlling the flow of the network traffic includes reducing a size of a congestion window for the network traffic, when the reason for packet loss is due to the link congestion.

Aspect 5. The method of Aspect 4, wherein the reducing the size of the congestion window includes reducing the size of the congestion window by a multiplicative factor.

Aspect 6. The method of Aspect 5, wherein the multiplicative factor is at least a half or a quarter size of the congestion window.

Aspect 7. The method of any of Aspects 2-6, wherein the detecting of the network congestion signal is executed in at least two time windows, wherein when the network congestion signal is detected in one of the at least two time windows, the method further comprises: determining that the reason for the packet loss is due to link congestion, and reducing the flow of network traffic.

Aspect 8. The method of any of Aspects 1-3 and 7, wherein the determining the reason for the packet loss includes: detecting for a network congestion signal, wherein when the network congestion signal is not detected, maintaining the flow of the network traffic.

Aspect 9. The method of any of Aspects 1-3, further comprising increasing an amount of the network traffic by increasing a size of a congestion window at an end node by a fixed amount, until the packet loss is detected.

Aspect 10. The method of Aspect 9, wherein the fixed amount is at least one Maximum Segment Size (MSS) for the congestion window.

Aspect 11. A congestion controller in a computer network using a communication protocol, the congestion controller comprising: a processor configured to execute instructions, wherein the instructions, when executed, cause the processor to: detect packet loss of packets of data in network traffic received from one or more sender nodes; determine a reason for the packet loss; and control a flow of network traffic in the computer network based on the determined reason for the packet loss, wherein the reason for packet loss is due to link congestion or a different reason for packet loss.

Aspect 12. The congestion controller of Aspect 11, wherein the processor is further caused to detect for a network congestion signal, wherein when the network congestion signal is detected, determining that the reason for the packet loss is due to link congestion.

Aspect 13. The congestion controller of any of Aspects 11-12, wherein the network congestion signal includes one or more of an Explicit Congestion Notification (ECN), a Round-Trip Time (RTT), or Inband Network Telemetry (INT).

Aspect 14. The congestion controller of any of Aspects 12-13, wherein the congestion controller is configured to control the flow of the network traffic by reducing a size of a congestion window for the network traffic, when the reason for packet loss is due to the link congestion.

Aspect 15. The congestion controller of any of Aspects 12-14, wherein the congestion controller comprises at least two time windows, wherein the congestion controller is configured to decrease the flow of the network traffic when the network congestion signal is detected in at least one of the at least two time windows.

Aspect 16. The congestion controller of any of Aspects 11-13, wherein the processor is further caused to determine the reason for the packet loss includes by: detecting for a network congestion signal, wherein when the network congestion signal is not detected, maintaining the flow of the network traffic.

Aspect 17. A non-transitory computer-readable medium having computer-executable instructions stored thereon that, upon execution, cause one or more processors of an end node of a computer network using a communication protocol to perform operations comprising: detecting packet loss of packets of data in the network traffic received from one or more sender nodes; determining a reason for the packet loss; and controlling a flow of network traffic in the computer network based on the determined reason for the packet loss, wherein the reason for packet loss is due to link congestion or a different reason for packet loss.

Aspect 18. The non-transitory computer-readable medium of Aspect 17, wherein the determining the reason for the packet loss includes: detecting for a network congestion signal, wherein when the network congestion signal is detected, determining that the reason for the packet loss is due to link congestion.

Aspect 19. The non-transitory computer-readable medium of Aspects 17-18, wherein the controlling the flow of the network traffic includes reducing a size of a congestion window for the network traffic at the end node, when the reason for packet loss is due to the link congestion.

Aspect 20. The non-transitory computer-readable medium of Aspect 17, wherein the determining the reason for the packet loss includes: detecting for a network congestion signal, wherein when the network congestion signal is not detected, maintaining the flow of the network traffic.

The terminology used in this specification is intended to describe particular embodiments and is not intended to be limiting. The terms "a," "an," and "the" include the plural forms as well, unless clearly indicated otherwise. The terms "comprises" and/or "comprising," when used in this specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. This specification and the embodiments described are exemplary only, with the true scope of the disclosure being indicated by the claims that follow.

## Claims

1. A method using a communication protocol for controlling network traffic for a computer network, the method comprising:
detecting (510) packet loss of packets of data in the network traffic received from one or more sender nodes;
determining (530) a reason for the packet loss; and
controlling a flow of network traffic in the computer network based on the determined reason for the packet loss,
wherein the reason for packet loss is due to link congestion or a different reason for packet loss.

2. The method of claim 1, wherein the determining (530) the reason for the packet loss includes:
detecting for a network congestion signal,
wherein when the network congestion signal is detected, determining that the reason for the packet loss is due to link congestion.

3. The method of claim 2, wherein the network congestion signal includes one or more of an Explicit Congestion Notification (ECN), a Round-Trip Time (RTT), or Inband Network Telemetry (INT).

4. The method of claim 1, wherein the controlling the flow of the network traffic includes reducing (560) a size of a congestion window for the network traffic, when the reason for packet loss is due to the link congestion.

5. The method of claim 4, wherein the reducing (560) the size of the congestion window includes reducing the size of the congestion window by a multiplicative factor.

6. The method of claim 5, wherein the multiplicative factor is at least a half or a quarter size of the congestion window.

7. The method of claim 2, wherein the detecting of the network congestion signal is executed in at least two time windows,
wherein when the network congestion signal is detected in one of the at least two time windows, the method further comprises:
determining that the reason for the packet loss is due to link congestion, and
reducing the flow of network traffic.

8. The method of claim 1, wherein the determining (530) the reason for the packet loss includes:
detecting for a network congestion signal,
wherein when the network congestion signal is not detected, maintaining the flow of the network traffic.

9. The method of claim 1, further comprising increasing an amount of the network traffic by increasing a size of a congestion window at an end node by a fixed amount, until the packet loss is detected.

10. The method of claim 9, wherein the fixed amount is at least one Maximum Segment Size (MSS) for the congestion window.

11. A congestion controller in a computer network using a communication protocol, the congestion controller comprising:
a processor configured to execute instructions, wherein the instructions, when executed, cause the processor to:
detect packet loss of packets of data in network traffic received from one or more sender nodes;
determine a reason for the packet loss; and
control a flow of network traffic in the computer network based on the determined reason for the packet loss,
wherein the reason for packet loss is due to link congestion or a different reason for packet loss.

12. The congestion controller of claim 11, wherein the processor is further caused to detect for a network congestion signal, wherein when the network congestion signal is detected, determining that the reason for the packet loss is due to link congestion,
preferably the congestion controller is configured to control the flow of the network traffic by reducing a size of a congestion window for the network traffic, when the reason for packet loss is due to the link congestion, or preferably the congestion controller comprises at least two time windows, wherein the congestion controller is configured to decrease the flow of the network traffic when the network congestion signal is detected in at least one of the at least two time windows.

13. The congestion controller of claim 11, wherein the network congestion signal includes one or more of an Explicit Congestion Notification (ECN), a Round-Trip Time (RTT), or Inband Network Telemetry (INT).

14. The congestion controller of claim 11, wherein the processor is further caused to determine the reason for the packet loss includes by:
detecting for a network congestion signal,
wherein when the network congestion signal is not detected, maintaining the flow of the network traffic.

15. A non-transitory computer-readable medium having computer-executable instructions stored thereon that, upon execution, cause one or more processors of an end node of a computer network using a communication protocol to perform the method according to any of claims 1-10.
